# EUROPÄISCHE PATENTSCHRIFT

(11) **EP 0 857 096 B1**
(45) Veröffentlichungstag und Bekanntmachung des Hinweises auf die Patenterteilung: **31.01.2001**
(21) Anmeldenummer: 97923984.5
(22) Anmeldetag: 22.05.1997
(51) Int. Cl.: B23B 3/06

(54) **DREHMASCHINE, INSBESONDERE LANGDREHMASCHINE ZUM BEARBEITEN STANGENFÖRMIGEN WERKSTOFFS**
LATHE, IN PARTICULAR A LONG-TURNING LATHE, FOR WORKING BAR-SHAPED WORKPIECES
TOUR, EN PARTICULIER TOUR A CHARIOTER, POUR L'USINAGE DE MATERIAUX EN FORME DE BARRES

(30) Priorität: 28.05.1996 DE 19621406
(43) Veröffentlichungstag der Anmeldung: 12.08.1998
(73) Patentinhaber: Traub Drehmaschinen GmbH, 73262 Reichenbach (DE)
(72) Erfinder: SONNEK, Werner, D-73669 Lichtenwald (DE); BAUMANN, Ulrich, D-73252 Lenningen (DE)
(74) Vertreter: Goetz, Rupert, Dipl.-Ing.
(86) Internationale Anmeldenummer: EP9702631
(87) Internationale Veröffentlichungsnummer: WO9745221

(56) Entgegenhaltungen:
- EP-A- 0 371 450
- EP-A- 0 613 745

## Beschreibung

Die Erfindung betrifft eine Drehmaschine, inbesondere Langdrehmaschine zum Bearbeiten stangenförmigen Werkstoffs, mit
- einer Hauptspindel, die in einem Spindelstock gelagert ist und eine Hauptachse definiert,
- mindestens einem ersten Werkzeugträger, der auf einer Seite einer die Hauptachse enthaltenden Mittelebene der Drehmaschine angeordnet, radial zur Hauptachse zustellbar und mit mindestens einem Werkzeughalter für Werkzeuge zum umfangsseitigen Bearbeiten eines an der Hauptspindel gehaltenen Werkstücks bestückbar ist,
- einem zweiten Werkzeugträger (34), der auf der entgegengesetzten Seite der Mittelebene (YZ) angeordnet und ebenfalls radial zustellbar und mit mindestens einem Werkzeughalter (36) für Werkzeuge zum umfangsseitigen Bearbeiten eines an der Hauptspindel (18) gehaltenen Werkstücks (Wl) bestückbar ist,
- einem dritten Werkzeugträger, der dem Spindelstock gegenüberliegend angeordnet, axial zur Hauptspindel zustellbar, mit mehreren Werkzeughaltern zum vorderseitigen Bearbeiten des an der Hauptspindel gehaltenen Werkstücks bestückbar und nacheinander in mehrere Stellungen schaltbar ist, in denen je einer dieser Werkzeughalter zur Hauptspindel ausgerichtet ist,
- einer Gegenspindel, die im Wechsel mit den Werkzeughaltern des dritten Werkzeugträgers axial zur Hauptspindel ausrichtbar ist, um von ihr ein Werkstück zu übernehmen, und
- einem vierten Werkzeugträger, der gegen die Hauptachse seitlich versetzt angeordnet und mit mehreren Werkzeughaltern für Werkzeuge zum rückseitigen Bearbeiten des an der Gegenspindel gehaltenen Werkstücks bestückbar ist,
- wobei durch die an den Werkzeughaltern des ersten und des zweiten Werkzeugträgers eingespannten Werkzeuge Arbeitsräume definiert sind, die auf je einer Seite der Mittelebene liegen,
- und wobei die Gegenspindel mit jedem Werkzeughalter am vierten Werkzeugträger auf einer gemeinsamen, zur Hauptachse parallelen Achse ausrichtbar ist.

Als Automaten gestaltete Langdrehmaschinen, im folgenden Langdrehautomaten genannt, arbeiten üblicherweise entweder nach dem Prinzip "Schweizer" oder nach dem Prinzip "Offenbacher". In beiden Fällen verarbeiten Langdrehautomaten stangenförmigen Werkstoff. Geschieht dies nach dem Prinzip "Schweizer", so bewegt sich der Spindelstock während des Drehens längs der Hauptachse und schiebt dabei den Werkstoff durch eine stillstehende Führungsbüchse hindurch in den Arbeitsbereich mindestens eines seitlichen Werkzeugträgers, der sich während des Drehens normalerweise nicht in Richtung der Hauptachse bewegt. Beim Arbeiten nach dem Prinzip "Offenbacher" wird der Werkstoff zu Beginn jedes Arbeitszyklus um eine Werkstofflänge vorgeschoben, um dann während des Drehens nicht mehr axial bewegt zu werden; hingegen werden die Führungsbüchse und der oder die seitlichen Werkzeugträger während des Drehens in Richtung der Hauptachse zur Arbeitspindel hin verschoben. In beiden Fällen stützt die Führungsbüchse den Werkstoff während des Drehvorganges ab. Die Erfindung ist nicht auf eines dieser beiden Arbeitsprinzipien beschränkt.

Bei einem bekannten, nach dem Prinzip "Schweizer" arbeitenden Langdrehautomaten der eingangs beschriebenen Gattung (Prospekt SR-16/20 der STAR MICRONICS CO., LTD. von 1995) sind drei der vier Werkzeugträger sogenannte Linearrevolver, das sind Werkzeugträger mit mehreren in einer Reihe parallel zueinander angeordneten Werkzeughaltern, von denen jeweils einer durch eine geradlinige Schaltbewegung des Linearrevolvers in Arbeitsstellung bringbar ist. Der erste Linearrevolver ist oberhalb der waagerecht liegenden Hauptspindel auf einem senkrecht zustellbaren Schlitten angeordnet und trägt mehrere senkrecht nach unten weisende Drehstähle, die durch waagerechte, zur Hauptachse orthogonale Schaltbewegungen in Arbeitsstellung bringbar sind. Der zweite Linearrevolver ist seitlich neben der Hauptspindel auf einem waagerecht, orthogonal zur Hauptachse zustellbaren Schlitten angeordnet und trägt mehrere Bohr- bzw. Fräswerkzeuge, die durch senkrechte Schaltbewegungen in Arbeitsstellung bringbar sind. Der dritte Linearrevolver und die Gegenspindel sind auf einem der Hauptspindel axial gegenüberliegenden und in Richtung der Hauptachse sowie normal dazu waagerecht verstellbaren Schlitten angeordnet; der dritte Linearrevolver trägt mehrere waagerecht nebeneinander angeordnete, parallel zur Hauptachse ausgerichtete Werkzeughalter für je einen Bohrer oder dergleichen. Schließlich ist am Spindelstock seitlich neben der Hauptspindel ein vierter Werkzeugträger mit mehreren Werkzeughaltern für parallel zur Hauptachse waagerecht nebeneinander angeordnete Werkzeuge befestigt. Mit dieser bekannten Drehmaschine kann jeweils ein an der Hauptspindel gespanntes Werkstück zu einem gegebenen Zeitpunkt von einem Werkzeug umfangsseitig und von einem anderen Werkzeug an seiner vorderen Stirnseite bearbeitet werden, während ein zweites, an der Gegenspindel gespanntes Werkstück von einem Werkzeug an oder ausgehend von seiner hinteren Stirnfläche bearbeitet wird.

Eine ähnliche Drehmaschine der eingangs beschriebenen Gattung ist aus EP 0 613 745 A1 bekannt.

Der Erfindung liegt die Aufgabe zugrunde, eine Drehmaschine, inbesondere Langdrehmaschine zum Bearbeiten stangenförmigen Werkstoffs, derart weiterzubilden, daß eine größere Anzahl Arbeitsgänge gleichzeitig, jedoch ohne Kollisionsgefahr, ausgeführt werden kann.

Die Aufgabe ist erfindungsgemäß ausgehend von einer Drehmaschine der eingangs beschriebenen Gattung dadurch gelöst, daß
- die genannten Arbeitsräume zwischen sich und der Mittelebene zwickelförmige Freiräume freilassen, die sich mit zunehmendem Abstand von der Hauptachse erweitern, und
- sämtliche Werkzeuge des dritten und des vierten Werkzeugträgers sowie die Gegenspindel ständig in der Mittelebene angeordnet sind.

Damit wird erreicht, daß alle vorhandenen Werkzeugträger gleichzeitig mit je einem an ihnen angeordneten Werkzeug arbeiten können, so daß die Leistungsfähigkeit der Drehmaschine merklich gesteigert wird. Der zweite Werkzeugträger kann gegebenenfalls weggelassen werden.

Vorteilhafte Weiterbildunden der Erfindung ergeben sich aus den Unteransprüchen.

Ausführungsbeispiele der Erfindung werden im folgenden anhand schematischer Zeichnungen mit weiteren Einzelheiten beschrieben. In den Zeichnungen zeigen:
- Fig. 1: eine perspektivische Ansicht einer erfindungsgemäßen Drehmaschine,
- Fig. 2: eine der Fig. 1 entsprechende vergrößerte Ansicht der wichtigsten Baugruppen derselben Drehmaschine,
- Fig. 3: eine axiale Teilansicht mit zwei Werkzeugträgern der in Fig. 1 und 2 dargestellten Drehmaschine,
- Fig. 4: eine Variante zur Fig. 3,
- Fig. 5a: zwei weitere Werkzeugträger der in Fig. 1 und 2 dargestellten Drehmaschine in Draufsicht während eines ersten Arbeitsganges,
- Fig. 5b: eine entsprechende Draufsicht während eines folgenden Arbeitsganges,
- Fig. 6a: eine gegenüber Fig. 5a abgewandelte Anordnung in Draufsicht während eines ersten Arbeitsganges und
- Fig. 6b: eine der Fig. 6a entsprechende Draufsicht während eines weiteren Arbeitsganges.

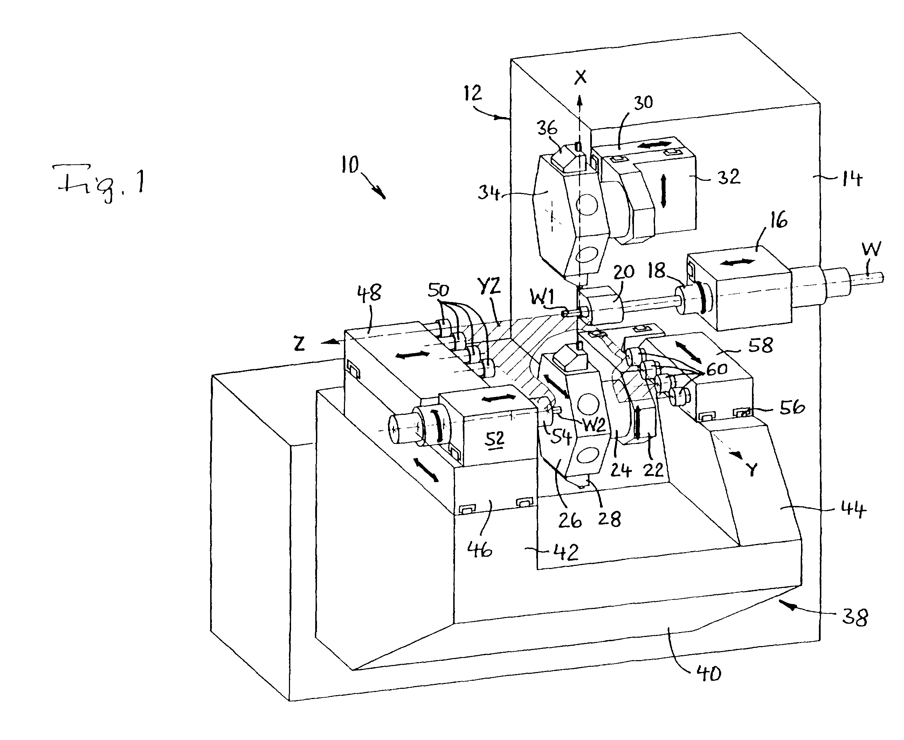

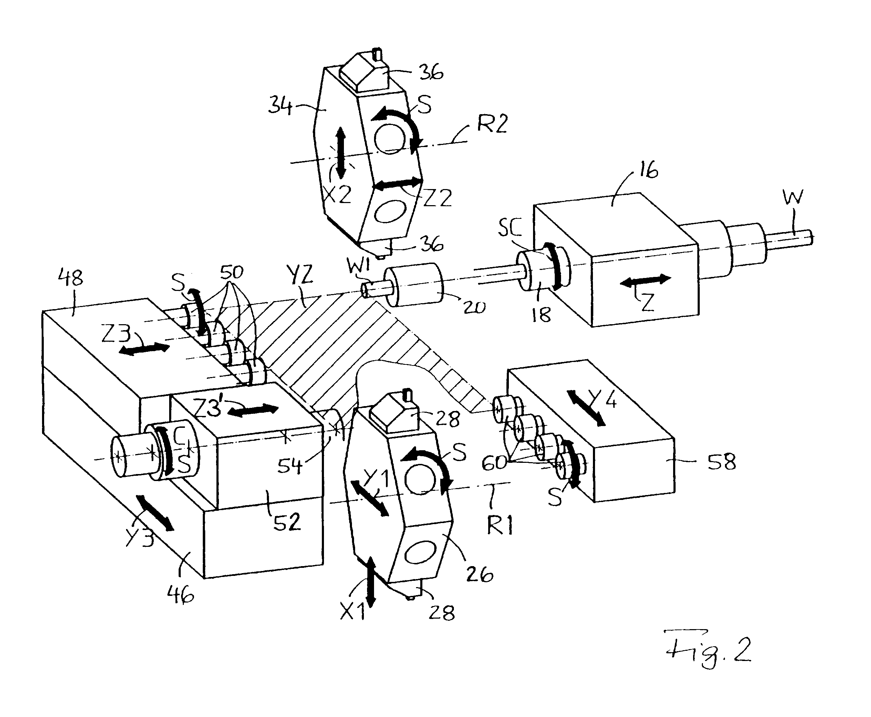

Die in Fig. 1 bis 3 dargestellte Drehmaschine ist ein nach dem Prinzip "Schweizer" arbeitender Langdrehautomat mit einem Maschinengestell 10, das ein orthogonales Koordinatensystem mit einer senkrechten Achse X, einer waagerechten Querachse Y und einer waagerechten Längsachse Z definiert; letztere wird im folgenden als Hauptachse Z bezeichnet. Zum Maschinengestell 10 gehört ein Ständer 12 mit einer vorderen Längsseite 14, die in einer zu den Achsen X und Z parallelen Ebene liegt, und an der ein Spindelstock 16 in Richtung der Hauptachse Z verschiebbar geführt ist. Im Spindelstock 16 ist eine Hauptspindel 18 gelagert, die in Fig. 2 mit den Symbolen S und C versehen ist, was bedeutet, daß sie antreibbar (S) und winkelgesteuert (C) ist. Durch die Hauptspindel 18 und eine an der vorderen Längsseite 14 des Ständers 12 befestigte Führungsbüchse 20 hindurch wird stangenförmiger Werkstoff W längs der Hauptachse Z zugeführt. Der aus der Führungsbüchse 20 herausragende vordere Abschnitt des stangenförmigen Werkstoffs W wird im folgenden als erstes Werkstück W1 bezeichnet. Sobald dieser Abschnitt vom stangenförmigen Werkstoff W abgetrennt ist, um weiterbearbeitet zu werden, wird er als zweites Werkstück W2 bezeichnet. Die gesamte Bearbeitung der Werkstücke W1 und W2 findet unmittelbar in oder nahe der waagerechten Ebene statt, welche die Hauptachse Z enthält und im folgenden als Mittelebene YZ bezeichnet wird.

Unterhalb der Mittelebene YZ ist an der vorderen Längsseite 14 des Ständers 12 ein unterer X-Schlitten 22 senkrecht verschiebbar geführt, dessen Verschieberichtung in Fig. 2 mit Xl bezeichnet ist. Auf diesem Schlitten 22 ist parallel zu Y-Achse ein unterer Y-Schlitten 24 verschiebbar geführt, dessen Verschieberichtung in Fig. 2 mit Y1 bezeichnet ist. Auf dem Schlitten 24 ist ein erster Werkzeugträger 26 angeordnet, der in der Ausführungsform gemäß Fig. 1 bis 3 als Sternrevolver mit Aufspannflächen für sechs Werkzeughalter 28 ausgeführt und um eine zur Hauptachse Z parallele erster Revolverachse R1 zwischen sechs Winkelstellungen hin- und herdrehbar (schaltbar) ist.

In einem Abstand oberhalb der Mittelebene YZ ist an der vorderen Längsseite 14 ein oberer Z-Schlitten 30 in einer zur Hauptachse Z parallelen, in Fig. 2 mit Z2 bezeichneten Richtung verschiebbar geführt. Auf dem Z-Schlitten 30 ist ein oberer X-Schlitten 32 längs einer in Fig. 2 mit X2 bezeichneten senkrechten Achse verschiebbar geführt. Auf dem oberen X-Schlitten 32 ist ein zweiter Werkzeugträger 34 angeordnet, der ebenfalls als Sternrevolver mit Platz für sechs Werkzeughalter 36 ausgeführt und um eine zur Hauptachse Z parallele zweite Revolverachse R2 schaltbar ist.

Zum Maschinengestell 10 gehört ferner eine an der vorderen Längsseite 14 des Ständers 12 befestigte Konsole 38, die - in Richtung der waagerechten Koordinatenachse Y betrachtet - U-förmig ist und eine Basis 40 sowie zwei von dieser senkrecht nach oben ragende Schenkel 42 und 44 aufweist. Die Schenkel 42 und 44 lassen zwischen sich einen Raum frei, in dem der erste Werkzeugträger 26 angeordnet ist. Auf dem in Fig. 1 linken Schenkel 42 ist ein Y-Schlitten 46 längs einer zur Y-Achse parallelen, in Fig. 2 mit Y3 bezeichneten Achse verschiebbar geführt. Auf dem Y-Schlitten 46 ist ein dritter Werkzeugträger 48 in einer zur Hauptachse Z parallelen, in Fig. 2 mit Z3 bezeichneten Richtung verschiebbar geführt. Der dritte Werkzeugträger 48 ist in der Art eines Linearrevolvers mit mehreren, im dargestellten Beispiel vier, Werkzeughaltern 50 ausgerüstet, die um je eine zur Hauptachse Z parallele, in der Mittelebene YZ liegende Achse drehantreibbar und zum Einspannen von Bohrern, Fräsern und dergleichen ausgebildet sind.

Auf dem Y-Schlitten 46 ist ferner ein Z-Schlitten 52 angeordnet, der im dargestellten bevorzugten Ausführungsbeispiel, jedoch nicht notwendigerweise, unabhängig vom dritten Werkzeugträger 48 längs einer zur Hauptachse Z parallelen, in Fig. 2 mit Z3' bezeichneten Achse verschiebbar ist. In diesem Z-Schlitten 52 ist eine zur Hauptachse Z parallele Gegenspindel 54 gelagert, die C-achsengesteuert antreibbar ist, bei Bedarf synchron mit der Hauptspindel 18. Die Achse der Gegenspindel 54 liegt ebenfalls in der Mittelebene YZ.

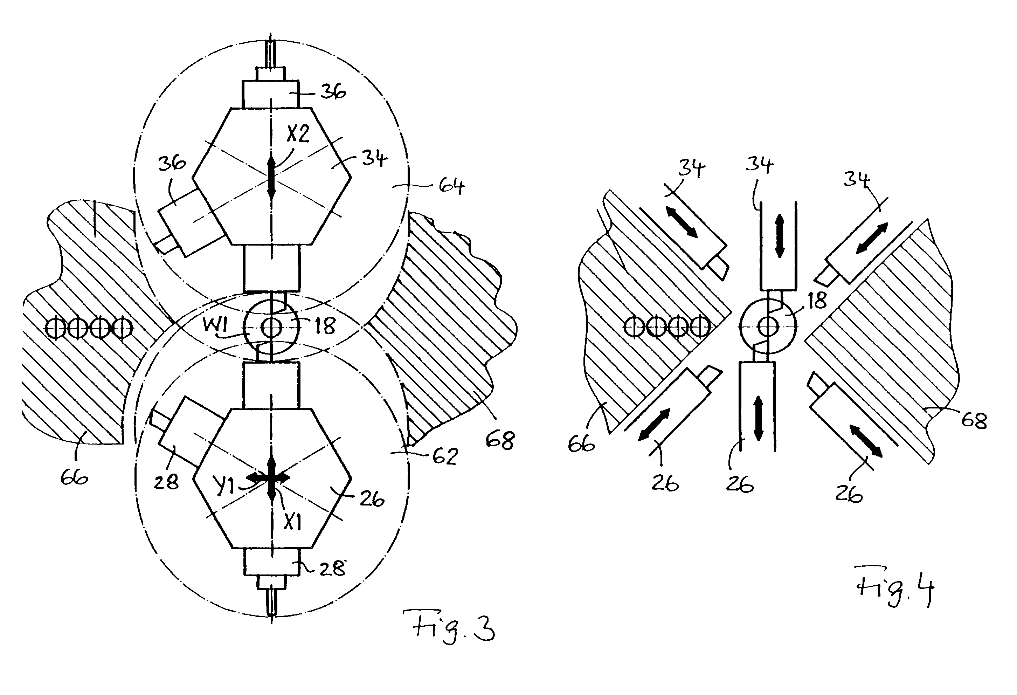

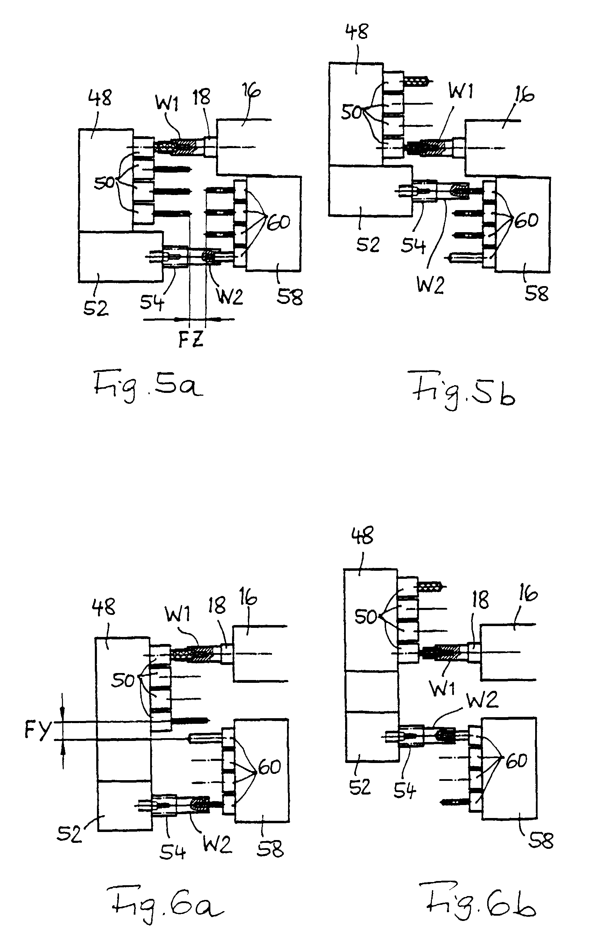

Auf dem in Fig. 1 rechten Schenkel 44 ist ein vierter Werkzeugträger 58 angeordnet, der vorzugsweise, z.B. mittels nur angedeuteter Führungen 56, in einer zur Y-Richtung parallelen, in Fig. 2 mit Y4 bezeichneten Richtung verschiebbar geführt ist. Der vierte Werkzeugträger 58 trägt, insoweit dem dritten Werkzeugträger 48 entsprechend, mehrere, im dargestellten Beispiel vier Werkzeughalter 60, die ebenso wie die Werkzeughalter 50 um je eine zur Hauptachse Z parallele, in der Mittelebene YZ liegende Achse drehantreibbar sind. Die in Y-Richtung von Achse zu Achse gemessenen Abstände zwischen den einzelnen Werkzeughaltern 60 sind untereinander gleich und ebenso groß wie die Abstände zwischen den Werkzeughaltern 50. Der Abstand zwischen der Gegenspindel 54 und dem ihr nächstgelegenen Werkzeughalter 50 kann gemäß Fig. 5a und 5b ungefähr doppelt so groß oder gemäß Fig. 6a und 6b ungefähr viermal so groß sein wie der Abstand zwischen zwei benachbarten der im dargestellten Beispiel vier Werkzeughalter 50 bzw. 60.

In Fig. 3 ist der vom ersten Werkzeugträger 26 und vom zweiten Werkzeugträger 34 beanspruchte Arbeitsraum 62 bzw. 64 dargestellt; diese Arbeitsräume sind durch die Flugkreise der an den Werkzeughaltern 28 bzw. 36 eingespannten Werkzeuge in Arbeitsstellung und in zurückgezogener Stellung des ersten Werkzeugträgers 26 bzw. des zweiten Werkzeugträgers 34 bestimmt. Zwischen diesen Arbeitsräumen 62 und 64 bleiben zur Mittelebene YZ ungefähr symmetrische zwickelförmige Freiräume 66 und 68 frei, in denen Werkzeuge am dritten Werkzeugträger 48 und am vierten Werkzeugträger 58 sowie die Gegenspindel 54 in der Mittelebene YZ bewegt werden und arbeiten können, ohne daß die Gefahr einer Kollision mit einem Werkzeug besteht, das an einem Werkzeughalter 28 oder 36 des ersten Werkzeugträgers 26 bzw. des zweiten Werkzeugträgers 34 befestigt ist. Demzufolge können gemäß Fig. 3 der erste Werkzeugträger 26 und der zweite Werkzeugträger 34 mit je einem Drehwerkzeug am Werkstück W1 arbeiten, um beispielsweise einen verhältnismäßig zeitaufwendigen Langdreharbeitsgang auszuführen, während der dritte Werkzeugträger 48 dasselbe Werkstück W1 an oder ausgehend von seinem vorderen, in Fig. 1 und 2 linken Ende bearbeitet. Dabei können nacheinander Werkzeuge, z.B. Bohrer, eingesetzt werden, die in je einem der Werkzeughalter 50 eingespannt sind.

Sobald diese umfangs- und vorderseitige Bearbeitung des ersten Werkstücks W1 abgeschlossen ist, wird der Y-Schlitten 46 in eine Stellung gebracht, in der die Gegenspindel 54 mit der Hauptspindel 18 fluchtet, das Werkgstück W1 erfaßt und ein butzenloses Abtrennen dieses Werkstücks von der Werkstoffstange W ermöglicht. Das abgetrennte, nun zweite Werkstück W2 wird durch Bewegungen des Y-Schlittens 46 nacheinander in die Arbeitsbereiche der Werkzeughalter 60 gebracht und von an diesen befestigten Werkzeugen bearbeitet, während gleichzeitig Werkzeuge an je einem der Werkzeughalter 28, 36 und 50 ein durch Verschieben des Spindelstocks 16 längs der Hauptachse Z in den Arbeitsraum der Maschine gelangendes neues erstes Werkstück W1 bearbeiten.

Falls erforderlich, läßt sich der vierte Werkzeugträger 58 längs der Achse Y4 so einstellen, daß an seinen Werkzeughaltern 60 eingespannte Werkzeuge das Werkstück W2 exzentrisch bearbeiten, während an den Werkzeughaltern 50 des dritten Werkzeugträgers 48 eingespannte Werkzeuge das Werkstück W1 zentrisch bearbeiten, oder umgekehrt.

In jedem Fall lassen sich Kollisionen zwischen Werkzeugen an den Werkzeughaltern 50 einerseits und an den Werkzeughaltern 60 andererseits entweder gemäß Fig. 5a und 5b durch einen Freiraum FZ in Richtung der Hauptachse Z vermeiden oder gemäß Fig. 6a und 6b durch einen Freiraum FY in Richtung der Y-Achse.

In Fig. 4 ist angedeutet, daß mehr als nur ein erster Werkzeugträger 26 und mehr als nur ein zweiter Werkzeugträger 34 vorgesehen sein können, sofern diese Werkzeugträger so angeordnet sind, daß sie in ihren Arbeitsstellungen zwei zur Mittelebene YZ ungefähr symmetrische zwickelförmige Freiräume 66 und 68 freilassen. Gemäß Fig. 4 sind drei erste Werkzeugträger 26 und drei zweite Werkzeugträger 34 vorgesehen, die sämtlich als radial zustellbare Linearschieber oder Stechschlitten mit Platz für nur je ein Werkzeug, insbesondere Drehwerkzeug, ausgebildet sind.

Als Alternative zu dem in den Zeichnungen dargestellten Ausführungsbeispiel, bei dem der dritte und der vierte Werkzeugträger 48 und 58 Linearrevolver sind, kann jeder dieser Werkzeugträger, oder einer von Ihnen, ein Sternrevolver sein, der um eine die Hauptachse Z in einem Abstand kreuzende, zur X-Achse parallele Revolverachse schaltbar ist. Auch dabei sind sämtliche Werkzeughalter des dritten und des vierten Werkzeugträgers in der Mittelebene YZ angeordnet.

## Patentansprüche

1. Drehmaschine, insbesondere Langdrehmaschine zum Bearbeiten stangenförmigen Werkstoffs, mit
- einer Hauptspindel (18), die in einem Spindelstock (16) gelagert ist und eine Hauptachse (Z) definiert,
- mindestens einem ersten Werkzeugträger (26), der auf einer Seite einer die Hauptachse (Z) enthaltenden Mittelebene (YZ) der Drehmaschine angeordnet, radial zur Hauptachse (Z) zustellbar und mit mindestens einem Werkzeughalter (28) für Werkzeuge zum umfangsseitigen Bearbeiten eines an der Hauptspindel (18) gehaltenen Werkstücks (W1) bestückbar ist,
- einem zweiten Werkzeugträger (34), der auf der entgegengesetzten Seite der Mittelebene (YZ) angeordnet und ebenfalls radial zustellbar und mit mindestens einem Werkzeughalter (36) für Werkzeuge zum umfangsseitigen Bearbeiten eines an der Hauptspindel (18) gehaltenen Werkstücks (W1) bestückbar ist,
- einem dritten Werkzeugträger (48) der dem Spindelstock (16) gegenüberliegend angeordnet, axial zur Hauptspindel (18) zustellbar, mit mehreren Werkzeughaltern (50) zum vorderseitigen Bearbeiten des an der Hauptspindel (18) gehaltenen Werkstücks (W1) bestückbar und nacheinander in mehrere Stellungen schaltbar ist, in denen je einer dieser Werkzeughalter (50) zur Hauptspindel (18) ausgerichtet ist,
- einer Gegenspindel (54), die im Wechsel mit den Werkzeughaltern (50) des dritten Werkzeugträgers (48) axial zur Hauptspindel (18) ausrichtbar ist, um von ihr ein Werkstück (W1) zu übernehmen, und
- einem vierten Werkzeugträger (58), der gegen die Hauptachse (Z) seitlich versetzt angeordnet und mit mehreren Werkzeughaltern (60) für Werkzeuge zum rückseitigen Bearbeiten des an der Gegenspindel (54) gehaltenen Werkstücks (W2) bestückbar ist,
- wobei durch die an den Werkzeughaltern (28,36) des ersten und des zweiten Werkzeugträgers (26 bzw. 34) eingespannten Werkzeuge Arbeitsräume (62 bzw. 64) definiert sind, die auf je einer Seite der Mittelebene (YZ) liegen,
- und wobei die Gegenspindel (54) mit jedem Werkzeughalter (60) am vierten Werkzeugträger (58) auf einer gemeinsamen, zur Hauptachse (Z) parallelen Achse ausrichtbar ist,
dadurch gekennzeichnet, daß
- die genannten Arbeitsräume (62,64) zwischen sich und der Mittelebene (YZ) zwickelförmige Freiräume (66,68) freilassen, die sich mit zunehmendem Abstand von der Hauptachse (Z) erweitern, und
- sämtliche Werkzeuge des dritten und des vierten Werkzeugträgers (48,58) sowie die Gegenspindel (54) ständig in der Mittelebene (X,Y) angeordnet sind.

2. Drehmaschine nach Anspruch 1,
dadurch gekennzeichnet, daß der erste und der zweite Werkzeugträger (26,34) zusätzlich zu ihrer Zustellbarkeit längs einer zur Mittelebene (YZ) orthogonalen Achse (X1 bzw. X2) längs mindestens je einer weiteren, zur Mittelebene (YZ) parallelen Achse (Y1 bzw. Z2) zustellbar sind.

3. Drehmaschine nach Anspruch 1 oder 2,
dadurch gekennzeichnet, daß der erste und zweite Werkzeugträger (26,34) Sternrevolver sind, die um je eine zur Hauptachse (Z) parallele Revolverachse (R1 bzw. R2) schaltbar sind.

4. Drehmaschine nach Anspruch 3,
dadurch gekennzeichnet, daß die beiden Revolverachsen (R2) und die Hauptachse (Z) in einer gemeinsamen, zur Mittelebene (YZ) orthogonalen Ebene liegen.

5. Drehmaschine nach Anspruch 1 oder 2,
dadurch gekennzeichnet, daß mindestens zwei erste Werkzeugträger (26) und zwei zweite Werkzeugträger (34) vorgesehen sind, die je für sich nur radial zur Hauptachse (Z) zustellbar sind und nur je einen Werkzeughalter (28;36) tragen.

6. Drehmaschine nach einem der Ansprüche 1 bis 5,
dadurch gekennzeichnet, daß
- der dritte und der vierte Werkzeugträger (48,58) Linearrevolver sind, und
- der vierte Werkzeugträger (58) in mehrere Stellungen schaltbar ist, in denen je einer der Werkzeughalter (60) des vierten Werkzeugträgers (58) mit der Gegenspindel (54) fluchtet, ohne daß diese ihre Stellung zu verändern braucht.

7. Drehmaschine nach einem der Ansprüche 1 bis 6,
dadurch gekennzeichnet, daß der vierte Werkzeugträger (58) unabhängig vom ersten und zweiten Werkzeugträger (26,34) in der Mittelebene (YZ) orthogonal zur Hauptachse (Z) zustellbar ist.

8. Drehmaschine nach einem der Ansprüche 1 bis 5,
dadurch gekennzeichnet, daß der dritte und/oder der vierte Werkzeugträger (48;58) ein Sternrevolver ist, der um eine die Hauptachse (Z) in einem Abstand kreuzende Revolverachse schaltbar ist.

9. Drehmaschine nach einem der Ansprüche 1 bis 8,
dadurch gekennzeichnet, daß
- sie ein Maschinengestell (10) mit zwei Hauptbaugruppen aufweist, nämlich
- einem Ständer (12), an dem der Spindelstock (16) sowie der erste und der zweite Werkzeugträger (26,34) abgestützt sind, und
- einer Konsole (38), die an eine zur Hauptachse (Z) parallele Längsseite (14) des Ständers (12) angebaut ist und den dritten sowie den vierten Werkzeugträger (48,58) und die Gegenspindel (54) trägt.

10. Drehmaschine nach Anspruch 9,
dadurch gekennzeichnet, daß
- die Konsole (38), parallel zur Mittelebene (YZ) und orthogonal zur Hauptachse (Z) betrachtet, U-förmig mit zwei von einer gemeinsamen Basis (40) nach oben ragenden Schenkeln (42,44) ausgebildet ist, von denen
- ein Schenkel (42) den dritten Werkzeugträger (48) sowie die Gegenspindel (54)
- und der andere Schenkel (44) den vierten Werkzeugträger (58) abstützt,
- und ein Zwischenraum zwischen den beiden Schenkeln (42,44) den ersten Werkzeugträger (26) aufnimmt.

## Claims

1. A lathe, in particular a longitudinal turning lathe for machining bar-shaped material, comprising
- a main spindle (18) which is mounted in a headstock (16) and defines a main axis (Z);
- at least one first tool carrier (26) which is arranged on one side of a centre plane (YZ) of the lathe containing the main axis (Z), adapted to be fed radially to the main axis (Z), and adapted to be provided with at least one tool holder (28) for tools for machining the circumference of a workpiece (Wl) held on the main spindle (18);
- a second tool carrier (34) which is arranged on the opposite side of the centre plane (YZ) and is also adapted to be fed radially and to be provided with at least one tool holder (36) for tools for machining the circumference of a workpiece (W1) held on the main spindle (18);
- a third tool carrier (48) which is arranged opposite the headstock (16), adapted to be fed axially with respect to the main spindle (18), adapted to be provided with several tool holders (50) for machining the front side of the workpiece (Wl) held on the main spindle (18), and adapted to be indexed successively to several positions in which one each of said tool holders (50) is aligned with the main spindle (18);
- a counter spindle (54) which, alternating with the tool holders (50) of the third tool carrier (48), is adapted to be aligned axially with respect to the main spindle (18) to take over a workpiece (W1) from it, and
- a fourth tool carrier (58) which is arranged laterally offset with respect to the main axis (Z) and adapted to be provided with several tool holders (60) for tools for machining the rear side of the workpiece (W2) held on the counter spindle (54),
- wherein the tools clamped on the tool holders (28, 36) of the first and second tool carriers (26 and 34, respectively) define working spaces (62 and 64, respectively) which are located on one side of the centre plane (YZ) each,
- and wherein the counter spindle (54) is adapted to be aligned with each tool holder (60) on the fourth tool carrier (58) on a common axis parallel to the main axis (Z),
characterized in that
- the said working spaces (62, 64) leave gusset-shaped free spaces (66, 68) between them and the centre plane (YZ) which widen with increasing distance from the main axis (Z), and
- all the tools of the third and fourth tool carriers (48, 58) as well as the counter spindle (54) are always arranged in the centre plane (X,Y).

2. The lathe according to claim 1,
characterised in that the first and second tool carriers (26, 34), in addition to their capability of being fed along an axis (X1 and X2, respectively) orthogonal to the centre plane (YZ), are adapted to be fed along at least one further axis (Y1 and Z2, respectively) each which is parallel to the centre plane (YZ).

3. The lathe according to claim 1 or 2,
characterised in that the first and second tool carriers (26, 34) are star turrets adapted to be indexed about a turret axis (Rl and R2, respectively) each which is parallel to the main axis (Z).

4. The lathe according to claim 3,
characterised in that the two turret axes (R2) and the main axis (Z) are located in a common plane orthogonal to the centre plane (YZ).

5. The lathe according to claim 1 or 2,
characterised in that at least two first tool carriers (26) and two second tool carriers (34) are provided, each of which individually is adapted to be fed only radially with respect to the main axis (Z) and carries only one tool holder (28; 36) each.

6. The lathe according to one of claims 1 to 5,
characterised in that
- the third and fourth tool carriers (48, 58) are linear turrets, and
- the fourth tool carrier (58) is adapted to be indexed to several positions in which one of the tool holders (60) each of the fourth tool carrier (58) is in alignment with the counter spindle, without the latter having to change its position.

7. The lathe according to one of claims 1 to 6,
characterised in that the fourth tool carrier (58) is adapted to be fed in the centre plane (YZ) orthogonally to the main axis (Z), independent of the first and second tool carriers (36, 34).

8. The lathe according to one of claims 1 to 5,
characterised in that the third and/or the fourth tool carrier (48; 58) is a star turret which is adapted to be indexed about a turret axis crossing the main axis (Z) at a distance.

9. The lathe according to one of claims 1 to 8,
characterised in that
- it comprises a machine frame (10) with two main structural components, namely
- a column (12) supporting the headstock as well as the first and second tool carriers (26, 34), and
- a console (38) which is attached to a longitudinal side (14) of the column (12) parallel with the main axis (Z) and carries the fourth tool carrier (48, 58) and the counter spindle (54).

10. The lathe according to claim 9,
characterised in that
- the console (38), as seen parallelly to the centre plane (YZ) and orthogonally to the main axis (Z), is U-shaped with two legs (42, 44) projecting upwardly from a common basis (40),
- one leg (42) of which supports the third tool carrier (48) as well as the counter spindle (54),
- and the other leg (44) supports the fourth tool carrier (58),
- and a space between the two legs (42, 44) accommodates the first tool carrier (26).

## Revendications

1. Tour, en particulier tour à charioter pour usiner des matériaux en forme de barres, comprenant
- une broche principale (18) qui est montée dans une poupée fixe (16) et définit un axe principal (Z),
- au moins un premier support d'outils (26) qui est disposé d'un côté d'un plan médian (YZ) du tour contenant l'axe principal (Z), pouvant avancer radialement par rapport à l'axe principal (Z) et comprenant au moins un porte-outil (28) pour des outils servant à l'usinage périphérique d'une pièce à usiner (W1) maintenue sur la broche principale (18),
- un deuxième support d'outils (34) qui est disposé du côté opposé du plan médian (YZ) et peut également avancer radialement et comprenant au moins un porte-outil (36) pour des outils servant à l'usinage périphérique d'une pièce à usiner (W1) maintenue sur la broche principale (18),
- un troisième support d'outils (48) qui est disposé opposé à la poupée fixe (16), peut avancer axialement par rapport à la broche principale (18), peut être équipé de plusieurs porte-outils (50) pour usiner le côté avant de la pièce à usiner (W1), maintenue sur la broche principale (18), et peut être enclenché successivement dans plusieurs positions dans chacune desquelles l'un de ces porte-outils (50) est aligné avec la broche principale (18),
- une contre-broche (54) qui peut être alignée axialement avec la broche principale (18) à la place des porte-outils (50) du troisième support d'outils (48), pour en reprendre une pièce à usiner (W1), et
- un quatrième support d'outils (58) qui est disposé décalé latéralement par rapport à l'axe (Z) et peut être équipé de plusieurs porte-outils (60) pour des outils servant à l'usinage du côté arrière de la pièce à usiner (W2) maintenue sur la contre-broche (54),
- dans lequel des zones de travail (62, respectivement 64) sont définies par les outils montés dans les porte-outils (28,36) du premier et du deuxième supports d'outils (26, respectivement 34), qui se trouvent chacune d'un côté du plan médian (YZ),
- et dans lequel la contre-broche (54) peut être alignée avec chaque porte-outil (60) du quatrième support d'outils (58) sur un axe commun parallèle à l'axe principal (Z),
caractérisé en ce que
- lesdites zones de travail (62, 64) laissent entre elles et le plan médian (YZ) des espaces libres en forme de coins (66, 68) qui s'élargissent en s'éloignant de l'axe principal (Z), et
- tous les outils du troisième et du quatrième supports d'outils (48,58) ainsi que la contre-broche (54) sont disposés en permanence dans le plan médian (X, Y).

2. Tour selon la revendication 1,
caractérisé en ce que le premier et le deuxième supports d'outils (26, 34) peuvent, outre leur faculté d'avancer le long d'un axe (X1, respectivement X2) orthogonal au plan médian (YZ), avancer chacun le long d'au moins un autre axe respectif (Yl, respectivement Z2) parallèle au plan médian (YZ).

3. Tour selon la revendication 1 ou 2,
caractérisé en ce que les premier et deuxième supports d'outils (26, 34), sont des tourelles revolver en étoile qui peuvent s'enclencher chacune autour d'un axe de revolver (R1, respectivement R2) parallèle à l'axe principal (Z).

4. Tour selon la revendication 3,
caractérisé en ce que les deux axes de tourelles revolver (R2) et l'axe principal (Z) se trouvent dans un plan commun orthogonal au plan médian (YZ).

5. Tour selon la revendication 1 ou 2,
caractérisé en ce qu'il comprend au moins deux premiers supports d'outils (26) et deux deuxièmes supports d'outils (34) qui ne peuvent avancer individuellement que radialement par rapport à l'axe principal (Z) et ne portent chacun qu'un seul porte-outil (28; 36).

6. Tour selon l'une quelconque des revendications 1 à 5,
caractérisé en ce que
- les troisième et quatrième supports d'outils (48, 58) sont des tourelles revolver linéaires, et
- le quatrième support d'outils (58) peut être enclenché dans plusieurs positions, dans chacune desquelles l'un respectif des porte-outils (60) du quatrième support d'outils (58) s'aligne avec la contre-broche (54), sans que celle-ci ait à modifier sa position.

7. Tour selon l'une quelconque des revendications 1 à 6,
caractérisé en ce que le quatrième support d'outils (58) peut avancer dans le plan médian (YZ) orthogonalement à l'axe principal (Z) indépendamment des premier et deuxième supports d'outils (26, 34).

8. Tour selon l'une quelconque des revendications 1 à 5,
caractérisé en ce que le troisième et / ou le quatrième support d'outils (48; 58) est une tourelle revolver en étoile qui peut être enclenchée autour d'un axe de tourelle revolver croisant à distance l'axe principal (Z).

9. Tour selon l'une quelconque des revendications 1 à 8,
caractérisé en ce
- qu'il présente un bâti de machine (10) comprenant deux sous-groupes principaux, à savoir
- un montant (12) supportant la poupée fixe (16) ainsi que les premier et deuxième supports d'outils (26, 34), et
- une console (38) qui est montée sur un côté longitudinal (14) du montant (12) parallèle à l'axe principal (Z) et porte le troisième ainsi que le quatrième support d'outils (48, 58) et la contre-broche (54).

10. Tour selon la revendication 9, caractérisé en ce que
- la console (38), considérée parallèlement au plan médian (YZ) et orthogonalement à l'axe principal (Z), est en forme de U comportant deux branches (42, 44), s'étendant vers le haut à partir d'une base commune (40), dont
- une branche (42) supporte le troisième support d'outils (48) ainsi que la contre-broche (54)
- et l'autre branche (44) supporte le quatrième support d'outils (58),
- et un espace intermédiaire entre les deux branches (42, 44) reçoit le premier support d'outils (26).
